# EUROPEAN PATENT SPECIFICATION

(11) **EP 2 778 128 B1**
(45) Date of publication and mention of the grant of the patent: **02.03.2016**
(21) Application number: 14158166.0
(22) Date of filing: 06.03.2014
(51) Int. Cl.: C01B 31/04

(54) **METHOD OF THERMAL REDUCTION OF GRAPHENE OXIDE**
VERFAHREN ZUR THERMISCHEN REDUKTION VON GRAPHENOXID
PROCÉDÉ DE RÉDUCTION THERMIQUE D'OXYDE DE GRAPHÈNE

(30) Priority: 15.03.2013 PL 40316813
(43) Date of publication of application: 17.09.2014
(73) Proprietor: Instytut Technologii Materialów Elektronicznych, 01-919 Warszawa (PL); Instytut Ceramki i Materialow Budowlanych, 02-676 Warszawa (PL); Nano Carbon Sp. z o.o., 02-677 Warszawa (PL)
(72) Inventor: Lipinska, Ludwika, 04-346 Warszawa (PL); Kozinski, Rafal, 00-719 Warszawa (PL); Wilinski, Zbigniew, 01-405 Warszawa (PL); Librant, Krzysztof, 01-908 Warszawa (PL); Aksienionek, Magdalena, 03-149 Warszawa (PL); Jagiello, Joanna, 08-500 Ryki (PL); Witek, Adam, 02-496 Warszawa (PL); Witoslawska, Irena, 02-796 Warszawa (PL); Perkowski, Krzysztof, 04-968 Warszawa (PL); Osuchowski, Marcin, 05-822 Milanowek (PL); Mularzuk, Zbigniew, 21-421 Tuchowicz (PL)
(74) Representative: Sielewiesiuk, Jakub

(56) References cited:
- CN-A- 102 602 925
- US-A1- 2012 171 108
- YUPENG ZHANG ET AL: "High quality graphene sheets from graphene oxide by hot-pressing", CARBON, vol. 54, 1 April 2013 (2013-04-01), pages 143-148, XP55121977, ISSN: 0008-6223, DOI: 10.1016/j.carbon.2012.11.012
- ATKINSON H V ET AL: "FUNDAMENTAL ASPECTS OF HOT ISOSTATIC PRESSING: AN OVERVIEW", METALLURGICAL AND MATERIALS TRANSACTIONS A: PHYSICAL METALLURGY & MATERIALS SCIENCE, ASM INTERNATIONAL, MATERIALS PARK, OH, US, vol. 31A, no. 12, 1 December 2000 (2000-12-01), pages 2981-3000, XP001540155, ISSN: 1073-5623, DOI: 10.1007/S11661-000-0078-2
- Nan Wu ET AL: "Synthesis of network reduced graphene oxide in polystyrene matrix by a two-step reduction method for superior conductivity of the composite", Journal of Materials Chemistry, vol. 22, no. 33, 22 June 2012 (2012-06-22) , page 17254, XP055205681, ISSN: 0959-9428, DOI: 10.1039/c2jm33114d

## Description

The object of the invention is a method of thermal reduction of graphene oxide by means of hot pressing. More specifically, the invention relates to a method of reduction of graphene oxide, especially in the form of powder, graphene paper, thin layers by subjecting it to a temperature and pressure under specified conditions.

Graphene oxide is a product of oxidation of flake graphite by means of strong oxidants, Hummers method being most commonly used for this purpose. Currently, many companies offer graphene oxide as a commercial product in the form of aqueous suspensions or powder. Graphene oxide is a specific chemical compound, the stoichiometry of which may vary within wide limits. Unfortunately, due to the large presence of (hydroxy, epoxy, carboxy) functional groups, it is an insulator. From the point of view of industrial application and of currently conducted research - it is highly desirable in a reduced form - i.e. in the form of graphene because after the reduction, its electrical conductivity increases by several orders. For further applications, the reduced graphene oxide is required in the form of suspensions, layers, and as a powder.

Until now, attempts were made to conduct the reduction of graphene oxide by means of: chemical, electrochemical, thermal method, ultraviolet radiation, and with microwaves [1]. Among them, the thermal method is considered to be very economical and to allow easy scaling up. It requires the use of neither catalysts, like e.g. the method of reduction with UV radiation, nor functionalising compounds, which are necessary during chemical reduction in solutions. Thus, the thermal reduction has an advantage over other methods that it allows obtaining a flake graphene which is chemically very pure. Various conditions of conducting thermal reduction processes were used: temperature, atmospheric composition, pressure. Authors of the work [2] investigated dependence of the reduction degree which which can, among others, be characterised by atomic ratio C/O (carbon/oxygen) depending on temperature. According to them, for temperatures lower than 500°C, the C/O ratio was lower than 7, whereas if exceeding the temperature of 750°C, it was already 13. However, in the work [3], changes in chemical structure of graphene oxide at different temperatures of annealing were monitored by means of XPS spectra which demonstrated that for effective reduction, high temperatures above 800°C are required. A measure of reduction effectiveness may also be the electrical conductivity of the obtained product - reduced graphene oxide (rGO). [4]. It is much easier to reduce small amounts of material, e.g. applied, in the form of thin films, on various substrates having good adhesion, and such situations are numerously reflected in the literature. Works related to the reduction of graphene oxide powder are less numerous [10-12]. The main difficulty in the thermal treatment of graphene oxide powder lies in its very developed surface and in its low specific weight. Placing a loose, light powder in an open crucible, with even a small gas flow, causes blowing of the material and large losses thereof. However, covering the crucible prevents quick discharge of post-reaction gases and changes local conditions in the reaction zone, thereby deteriorating parameters of the final product. Hot pressing is a novelty in the reduction of graphene oxide. The authors [13] have successfully applied the method of uniaxial hot pressing (pressure acting only in one direction) for obtaining rGO sheets. Another technology of hot pressing consists of subjecting the material to high pressure in all directions, which is the technology of hot isostatic pressing (HIP). It is used in the manufacture of graphene ceramic composites [14].

The technique of hot isostatic pressing was developed for the needs of nuclear power industry and used for the first time in the late fifties of the last century. During its development, it has found use in the ceramics and foundry industries, and in materials research. The idea of hot isostatic pressing consists of subjecting the tested material simultaneously to high pressure, conveyed by a factor of inert gases, and to high temperature. During development of the method, certain numerical standards characterising this method were established. Thus, pressures possible to obtain in the chamber of hot isostatic press typically do not exceed 2000 bar (200 MPa), although in special versions of these devices, maximum pressures of 3000 bar (300 MPa) may be achievable as a standard, and in laboratory versions, i.e. for pressure chambers of less than 100 mm in diameter, they can achieve 4000 bar (400 MPa). Similarly, a temperature standard is the temperature of working chamber of up to 2000 ºC, achievable as a result of ohmic heating in the graphite furnace. For the version of metallurgical presses, this standard is the maximum temperature of 1400 ºC, achievable with the use of molybdenum furnaces. From the viewpoint of industrial applications, the size of pressure chamber in high-temperature isostatic press is most important. Industrial standards for chambers start with diameters above 100 mm. In industrial practice, this implies the capacity of working zone of 1 litre and above. A typical capacity of workspace in high-temperature isostatic presses is several litres. It does not result from technical conditions of the construction of high-pressure chambers, but only from operational restrictions. This is evidenced by operating, record industrial installations of this type of presses. The largest among them, being currently operated, operate with high-pressure chambers with a diameter of 70 inches (about 178 cm), which results in a several hundred litres of workspace. It follows that for the technology of high-temperature hot isostatic pressing, there is not practically any problem with "scaling up" (i.e. scaling in the range of volume of working chambers of presses and in the range of volume of a single batch of processed material). The devices described in this paragraph are known and commercially available, possibly made for individual orders.

Patent application CN102602925 discloses the method of reduction of graphene oxide by means of hot pressing wherein graphene oxide is subjected to hot isostatic pressing (HIP), that is, to temperature of 900-2000 °C with a simultaneous compression by inert gas at a pressure in the range of 1-100 MPa, more preferably 10-50 MPa, particularly preferably 10-40 MPa.

However, the HIP technology as claimed has not ever been used for the reduction of graphene oxide in order to remove functional groups and for restoration of the sp² hybridisation, characteristic for chemically pure, non-defective graphene. And this is a condition for achieving good electrical conductivity - one of the most important operational parameters of this "unusual" material.

The idea behind the invention being applied is to reduce pure graphene oxide, whether in the form of powder, paper or thin films cast or deposited on the substrate by means of hot isostatic pressing. The intention of preserving a very developed surface of GO powder and the use of very high pressures seem to be in contradiction. Further, it has not been reported to use this technology in the manufacture of graphene paper and thin films deposited on the substrate, although in case of using very high pressures reaching 3000 bar (300 MPa), it seems to be a justified.

Numbers enclosed in square brackets above refer to the following publications of the prior art:
1. Carbon 50 (2012) 3210-3228, S. Pei, H.M. Cheng, "The reduction of graphene oxide".
2. J. Phys. Chem. B 110 (2006) 8535-8539, H. C. Schniepp et al., "Functionalized single graphene sheets derived from splitting graphite oxide".
3. J. Am. Chem. Soc. 131 (2009)15939-44, X. Li et al., "Simultaneous nitrogen doping and reduction of graphene oxide".
4. Nano Lett. 8 (2008) 323-327, Xuan Wang et al., "Transparent, Conductive Graphene Electrodes for Dye-Sensitized Solar Cells".
5. Materials Letters 64 (2010) 765-767, Tran Viet Cuong et al., "Optoelectronic properties of graphene thin films prepared by thermal reduction of graphene oxide".
6. Carbon 49 (2011) 2905-2916, Qing Bin Zheng et al., "Improved electrical and optical characteristics of transparent graphene thin films produced by acid and doping treatments".
7. Materials Research Bulletin 46 (2011) 2131-2134, A. Wei et al., "Synthesis of high-performance graphene nanosheets by thermal reduction of grapheme oxide".
8. Chemical Physics Letters 511 (2011) 110-115, Chan-Jun Kim et al., "Structural evolution of graphite oxide during heat treatment".
9. Carbon 50 (2012) 659-667, C. M. Chen et al., "Annealing a graphene oxide film to produce a free standing high conductive grapheme film".
10. Adv. Funct. Mater. 21 (2011) 3496-3501, Meihua Jin et al., "Facile Physical Route to Highly Crystalline Graphene".
11. Carbon 48 (2010) 1146-1152, W. Chen, I. Yan, P. R. Bangal, "Preparation of graphene by the rapid and mild thermal reduction of graphene oxide induced by microwaves".
12. Carbon Letters 13 (2013) 48-50, S. Lee, S. Park, "Facile mass production of thermally reduced grapheme oxide".
13. Carbon 54 (2013) 143-148, Y. Zhang et al., "High quality graphene sheets from graphene oxide by hot-pressing".
14. Materials Science and Engineering A 528 (2011) 7933-7937, S. F. Bartolucci et al., "Graphene-aluminum nanocomposites".

The method of reduction of graphene oxide by means of hot pressing according to the invention, wherein graphene oxide is subjected to hot isostatic pressing (HIP), that is, to a high temperature with a simultaneous compression by gas from all sides, in the reactor, is characterised in that the hot isostatic pressing is carried out at a temperature of 200 °C to 3000 °C, preferably of 1000 °C to 2000 °C, and at a pressure in the range of 150 MPa to 300 MPa.

Preferably, the inert gas-is selected from the group consisting of nitrogen, argon, helium and a mixture thereof.

Preferably, graphene oxide is in the form of powder, thin layer or paper.

Preferably, a reactor selected from the group consisting of high-temperature isostatic press, metallurgical press and furnace for hot isostatic pressing is used.

Now, the invention will be presented in greater detail in preferred embodiments, with reference to the accompanying drawings in which:
- Fig. 1: shows a characteristic Raman spectrum of reduced graphene oxide, obtained by the method according to the invention,
- fig. 2: shows an SEM image of dried graphene powder, obtained by the method according to the invention, under low magnification,
- fig. 3: shows an SEM image of graphene powder, obtained by the method according to the invention, under high magnification, with visible structure of a single flake,
- fig. 4: shows an SEM image of graphene paper, obtained by the method according to the invention, under high magnification, with visible structure composed of packets of graphene layers,
- fig. 5: shows an FTIR spectrum of graphene oxide effectively reduced according to the invention in the form of graphene paper (graphene paper, annealing at 2000 ºC, 300 MPa - Example II).

### Preferred Embodiments of the Invention

### Example I

Graphene oxide in the form of powder (50 g), placed in a graphite crucible, was inserted into the furnace for hot isostatic pressing. Such furnace is a device known in the art and commercially available. To perform this and subsequent processes described in the present application, a furnace made to order by Engineered Pressure Systems International (EPSI) with a diameter of working chamber of 260 mm was used. The furnace was closed and flushed with argon in order to remove the air in the system. By means of a high performance pump, the argon pressure was increased to the value of 1000 bar (100 MPa). Then, the system was heated until reaching the temperature of 1500 °C and the pressure of 3000 bar (300 MPa). These conditions were maintained for 30 mins, and then the temperature was lowered to room temperature. After cooling, the system was unsealed and vented, and the reduced graphene oxide in the form of non-agglomerated powder was removed from the furnace.

### Example II

Graphene oxide in the form of paper with a surface of 10 cm² (2.5x4 cm) was inserted into the furnace for hot isostatic pressing. The furnace was closed and flushed with argon in order to remove the air in the system. By means of a high performance pump, the argon pressure was increased to the value of 1000 bar (100 MPa). Then, the system was heated until reaching the temperature of 2000 °C and the pressure of 3000 bar (300 MPa). These conditions were maintained for 30 mins, and then the temperature was lowered to room temperature. After cooling, the system was unsealed and vented, and the reduced graphene oxide in the form of graphene paper was removed from the furnace.

### Example III

Graphene oxide in the form of layer with a thickness of 1 to 10 nm applied on the substrate of silicon carbide (SiC) with a 2 inch diameter was inserted into the furnace for hot isostatic pressing. The furnace was closed and flushed with argon in order to remove the air in the system. By means of a high performance pump, the argon pressure was increased to the value of 800 bar (80 MPa). Then, the system was heated until reaching the temperature of 800°C and the pressure of 2000 bar (200 MPa). These conditions were maintained for 30 mins, and then the temperature was lowered to room temperature. After cooling, the system was unsealed and vented, and the reduced graphene oxide in the form of greyish shiny layer on the SiC substrate was removed from the furnace.

According to the following literature data [15,16], electrical conductivity of graphene paper is 190 to 5.71 × 10⁵ S/m. Wherein such a high conductivity value was obtained through a combination of chemical reduction (with hydrazine) and of lengthy annealing at high temperatures (up to 2700 °C).
15. Nano Res DOI: 10.1007/s12274-013-0298-6 R. Rozada, et al. "Towards full repair of defects in reduced graphene oxide films by two-step graphitization".
16. C. Valles,et al., Carbon 50 (2012), 835-844, "Flexible conductive graphene paper obtained by direct and gentle annealing of graphene oxide paper".

Graphene oxide paper after reduction by the method according to the present invention has one of the highest conductivities compared to the values cited in the literature. This proves a very high quality of the reduced graphene oxide obtainable by the method according to the invention, the conductivity being 2.26 × 10⁵ S/m.

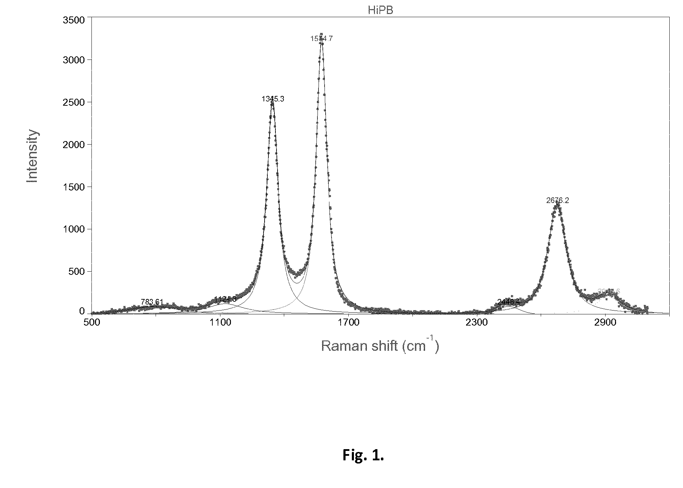

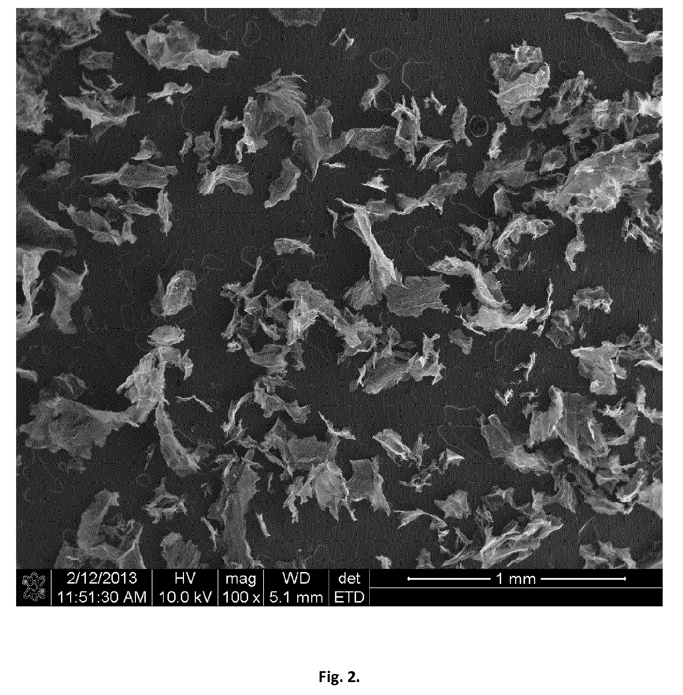

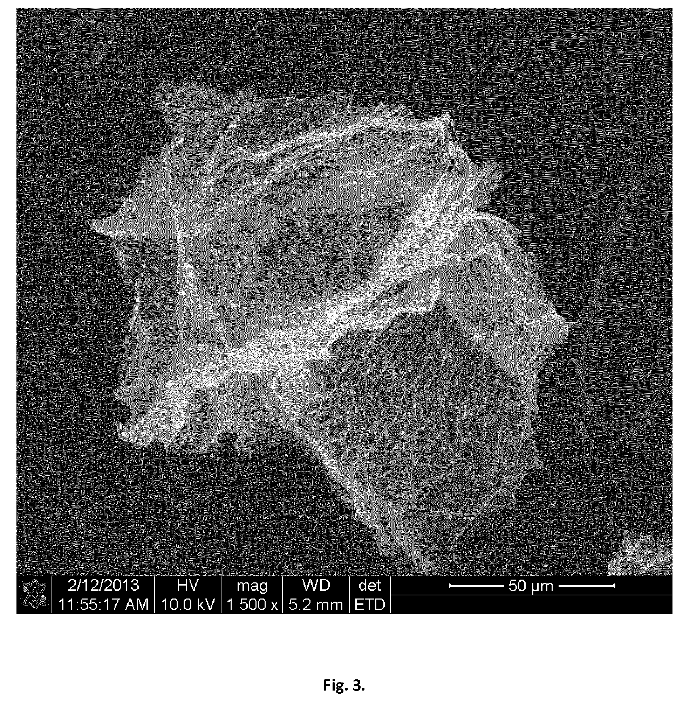

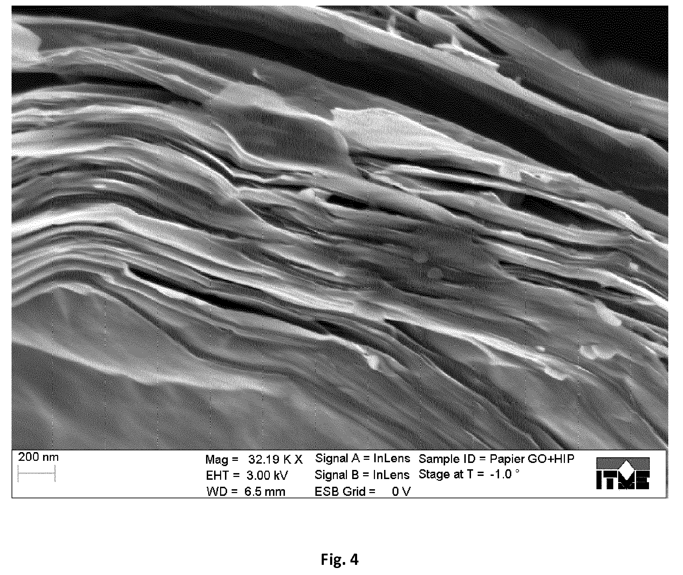

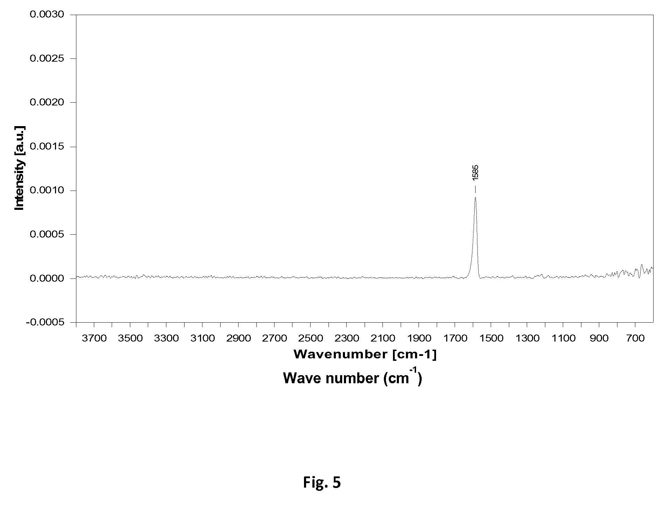

The reduced graphene oxide obtained in the examples described above was characterised and the results are illustrated in Figs. 1-5.

## Claims

1. A method of reduction of graphene oxide by means of hot pressing, wherein graphene oxide is subjected to hot isostatic pressing (HIP), that is, to a high temperature with a simultaneous compression by inert gas from all sides, in a reactor, **characterised in that** the hot isostatic pressing is carried out at a temperature of 200 °C to 3000 °C, preferably of 1000 °C to 2000 °C, and at a pressure in the range of 150 MPa to 300 MPa.

2. The method according to any one of the preceding claims, **characterised in that** the inert gas is selected from the group consisting of nitrogen, argon, helium and a mixture thereof.

3. The method according to any one of the preceding claims, **characterised in that** graphene oxide is in the form of powder, thin layer or paper.

4. The method according to any one of the preceding claims, **characterised in that** a reactor is selected from the group consisting of high-temperature isostatic press, metallurgical press, furnace for hot isostatic pressing is used.

## Patentansprüche

1. Verfahren zur Reduzierung von Graphenoxid mittels Heißpressen, in dem das Graphenoxid einem heißisostatischen Pressen (HIP) unterzogen wird, welches bei einer hohen Temperatur und einem gleichzeitigen Verdichten von Inertgas von allen Seiten in einem Reaktor verläuft, **gekennzeichnet dadurch dass** das heißisostatische Pressen in einer Temperatur zwischen 200 °C und 3000 °C ausgeführt wird, und vorzugsweise zwischen 1000 °C und 2000 °C, und in einem Druckbereich von 150M Pa bis 300 MPa.

2. Verfahren nach einem der vorgehenden Ansprüche, **gekennzeichnet dadurch dass** das Inertgas von einer Gruppe bestehend aus Nitrogen, Argon, Helium und einer Mischung davon ausgewählt wird.

3. Verfahren nach einem der vorgehenden Ansprüche, **gekennzeichnet dadurch dass** das Graphenoxid die Gestalt eines Pulvers, einer dünnen Schicht oder eines Blatts hat.

4. Verfahren nach einem der vorgehenden Ansprüche, **gekennzeichnet dadurch dass** der Reaktor ausgewählt ist aus einer Gruppe bestehend aus zum isostatischen Pressen benutzten Hochtemperatur-Isostatikpressen, metallurgischen Pressen oder Ofen.

## Revendications

1. Une méthode de réduction de l'oxyde de graphène au moyen de compression à chaud, dans laquelle l'oxyde de graphène est soumis à compression isostatique à chaud (CIC), c'est-à-dire à une température élevée avec une compression simultanée par gaz inerte de tous les côtés, **caractérisée en ce que** la compression isostatique à chaud est effectuée à une température de 200 °C à 3000 °C, de préférence de 1000 °C à 2000 °C, et sous une pression dans la plage de 150 MPa à 300 MPa.

2. La méthode selon l'une quelconque des revendications précédentes, **caractérisée en ce que** le gaz inerte est choisi dans le groupe constitué par l'azote, l'argon, l'hélium et leurs mélanges.

3. La méthode selon l'une quelconque des revendications précédentes, **caractérisée en ce que** l'oxyde de graphène est sous forme de poudre, couche mince ou papier.

4. La méthode selon l'une quelconque des revendications précédentes, **caractérisée en ce qu'**un réacteur est choisi dans le groupe constitué par une presse isostatique à haute température, une presse métallurgique, un four de compression isostatique à chaud est utilisé.
